# EUROPEAN PATENT SPECIFICATION

(11) **EP 3 079 465 B1**
(45) Date of publication and mention of the grant of the patent: **11.11.2020**
(21) Application number: 14838811.9
(22) Date of filing: 10.12.2014
(51) Int. Cl.: A01K 97/02

(54) **BAIT DISPENSING DEVICE FOR USE IN FISHING**
KÖDERAUSGABEVORRICHTUNG ZUR VERWENDUNG BEIM ANGELN
DISPOSITIF DE DISTRIBUTION D'APPÂTS À UTILISER POUR LA PÊCHE

(30) Priority: 11.12.2013 IT CR20130030; 13.02.2014 IT CR20140004
(43) Date of publication of application: 19.10.2016
(73) Proprietor: FG Devab S.r.l, 40064 Ozzano dell'Emilia (BO) (IT)
(72) Inventor: CANDINI, Stefano, 40043 Marzabotto (BO) (IT)
(74) Representative: Mari, Marco Giovanni
(86) International application number: PCT/IT2014/000324
(87) International publication number: WO 2015/087361

(56) References cited:
- WO-A1-2009/098507
- WO-A1-2013/153367
- GB-A- 2 019 181
- KR-A- 20090 012 972

## Description

The invention relates to the sector of equipment used for fishing.

In detail, the invention relates to a bait dispensing device for use in fishing, in particular for carp fishing.

Carp fishing is a specific recreational fishing technique used for catching carp and other large cyprinids with the same feeding habits. In fact, carp feed by sucking in and expelling food and not by biting it, as in the case of other species of fish with teeth. According to this fishing technique, the bait should not be placed directly on the hook, which instead must be left completely free. In this way, by leaving the hook uncovered this facilitates hooking to the mouth of the fish without penetrating the mouth, but so that it catches in the lower lip, which is a prevalently cartilaginous strip of flesh, and does not cause particular damage or pain to the carp.

Instead, the bait should be dispensed directly in the water.

For this purpose, over the years special bait dispensing devices have been devised, i.e. devices to contain the bait that are thrown into the water.

In technical jargon said devices are called bait dispensers.

Bait dispensers are devices that are used to contain the bait temporarily and to dispense it in the water, at the appropriate time, to attract bottom and surface fish.

For carp fishing it is extremely important for the bait dispenser to retain the bait during casting of the line and to open only after reaching the water, thereby allowing the bait to scatter over a limited and specific area of the body of water, before starting to fish.

The patent WO2009/098507A1 discloses a bait dispenser comprising a container of elongated shape, similar to that of an airship, divided into two valves connected to each other by means of an end hinge. The bait dispenser can be fastened to the line exactly at said hinge. On the front of the container, in a position opposite said hinge, there are provided means to control release of the system for closing and locking the two half-cylinders that are activated by impact with the water. These mechanisms allow the bait dispenser to remain closed while being cast and open only upon contact with the water, due to the divaricating elastic force exerted on the half-cylinders by a spring, thereby releasing the bait.

Also KR 2009 0012972 A discloses an exemple of bait dispenser.

Conventional bait dispensers, of the type described in the aforesaid patent application, have some limits and drawbacks, due mainly to the use of various mechanical components.

In particular, jamming often occurs both of the hinge and of the mechanical opening and release means located between the two half-cylinders of the container, due to the infiltration of residual bait and dirt, which in time can produce incrustations and hamper opening of the container. Therefore, the bait dispenser, or at least the damaged parts thereof, must be replaced frequently, causing an evident economic disadvantage.

Even more unfavourably, the inner volume of the container is partly occupied by said mechanical means for controlling release of the closing and locking system of the two valves, and therefore the space available for the bait is limited. Consequently, the user must repeat the bait casting operation several times in order to scatter an adequate amount of bait, as required by the rules of good practice of carp fishing.

Moreover, the person fishing must take particular care during loading of the bait dispenser, to avoid soiling the release mechanisms and the hinge. Unfavourably, besides considerably slowing down preparatory operations and fishing itself, conventional bait dispensers are also impractical, difficult to use, requiring a certain amount of dexterity and experience by the user.

Although the usual airship shape of prior art bait dispensers has a certain streamlining, it does not ensure equal distribution of the bait inside, which can unfavourably be distributed to a greater extent in the tip or the tail, or in one valve with respect to the other, and cause imbalance of the bait dispenser during casting, compromising the efficacy of the cast.

The two half-shells, remaining joined to each other at the hinge means also after impact with the water, do not favour total and even dispensing of the bait: there is the risk that part of the bait will remain inside the container, in proximity of the back part in which the hinge means are located.

In this way, the remaining bait is drawn and dispersed by the mutual movement of the two half-cylinders pulled by the line in the operation to recover the bait dispenser, creating a trail of bait that disturbs the fishing area.

These recovery operations are made more difficult by the fact that the two half-shells, due to the use of some metal components, such as the hinge means, do not float easily and tend to sink. During rewinding of the line after dispensing of the bait, it is difficult to bring the bait dispenser ashore, as it moves underwater and also risks getting caught up in algae, stones or any deposits on the bottom.

A further disadvantage of the bait dispensers described above, consists in the impossibility of arranging liquid tight means thereon, as the hinge means, the mechanical release means and the elastic opening means are provided along the joining edge of the two half-cylinders of the container, creating gaps in the edge and making it impossible to interpose, for example, a gasket.

The object of the invention is therefore to produce a bait dispensing device that is efficient, releases all the bait in the area reached by the cast, is durable, wear-resistance, light and accurate during casting, easy to use, above all during recovery, and suitable to contain liquids.

The objects are achieved with a bait dispensing device for use in fishing, adapted to be cast with a line and to open in the water, to allow dispensing of bait, comprising, according to independent claim 1:
- a container, adapted to house therein said bait during casting, divided into two half-shells having a substantially symmetrical shape with respect to a mutual joining plane;
- fastening means of said container to said line;
- reversible closing means for said container,
wherein:
- said reversible closing means for said container use the attraction force of a magnetic field active between said two half-shells,
- said fastening means of said container to said line comprise two flexible threadlike elements of the same length, each having two ends, where each first end is associated with one of said half-shells, and each second end is associated to each other so as to be simultaneously associated with said line, wherein said first ends of said two threadlike elements are associated with said half-shells in symmetrical position in proximity of the joining plane of the half-shells, wherein said two half-shells are adapted to separate completely from each other due to the action of the resisting force caused by friction with the water during sinking of the bait dispensing device,
characterized in that said threadlike elements have a spreading elastic force sucht that, due to their elasticity, they have a spreading effect on said half-shells during use to allow the opening of the bait dispenser (1) and to hold the half-shells (14, 24) in open position during the recovery of the bait dispenser (1).

Advantageously, the shape of said container reproduces a solid of revolution.

According to a particularly preferred embodiment of the invention, said container has a tapered shape and is provided with a head portion and a tail portion substantially pointed, where said fastening means of said container to said line are arranged on said tail portion.

Even more advantageously, said half-shells comprise diaphragms, arranged in said head portion and/or said tail portion of said container.

In particular, said diaphragms delimit hollow structures inside said bait dispensing device.

According to a further preferred embodiment of the invention, said magnetic field is generated by at least one pair of natural permanent magnets or by at least one pair of electromagnets, where the magnets of each pair are associated with said half-shells so that the respective opposite poles are facing each other, to generate a magnetic attraction force that acts through said joining plane of said half-shells.

Advantageously, said at least one pair of magnets is arranged along a joining edge of said half-shells.

Moreover, said bait dispensing device comprises two structures emerging from said joining plane of the two half-shells, each belonging to one half-shell at the tail portion of said container, adapted to offer a fastening point of said threadlike elements to said container, so that the elastic force exerted by said threadlike elements acts in the joining plane of said half-shells, causing them to slide one on the other.

According to a further preferred embodiment of the invention, said bait dispensing device comprises a tubular element, forced to slide on said threadlike elements, provided with a head ring adapted to occupy two end positions: a first position in which it is in proximity of their first ends and a second position in which it is in proximity of their second ends, so that, by occupying an intermediate position between said two end positions, it modulates the divaricating elastic force of said threadlike elements during casting to prevent accidental opening of the two half-shells.

In a possible variant of embodiment, said half-shells comprise liquid tight sealing means, arranged along a joining edge.

According to further preferred embodiments of the invention, said bait dispensing device comprises:
- two load bearing wings belonging alternatively to the joining plane of the two half-shells or to a plane orthogonal thereto;
- four stabilizing wings, two belonging to the joining plane of the two half-shells and two belonging to the plane orthogonal thereto.

The bait dispensing device according to the invention has numerous advantages.

The main advantage consists in the total absence of mechanical joining members between the two half-shells forming the container: consequently, there is no risk of jamming or breakage of the bait dispenser, which is thus durable and remains efficient at all times, without requiring any particular maintenance.

The absence of mechanical members and the possibility of filling the whole of the inner compartment of the container with the bait, without requiring to pay particular attention, facilitates and speeds up the loading operation: in fact, the two half-shells can be immersed directly in a bucket containing the bait, making use of all the available space. In this way, casting of the line in order to dispense bait in the body of water in which fishing will take place is optimized, speeding up all the preparatory procedures, considered tedious, and leaving more time for the enjoyable part of fishing.

Even more advantageous is the fact that the two half-shells separate completely when immersed in water, moving away from each other by mutually sliding on the joining plane and facilitating complete and homogeneous dispensing of the bait only in the sinking area.

Likewise, during recovery of the device, after all the bait has been dispensed, the two half-shells tend to join together again, first due to the friction force of the water on the outer surface of the two half-shells, and then due to the attraction force of the magnets. Closing of the container, after it has reached the surface of the water, prevents it from releasing any residual bait during recovery; this aids the person fishing who, with very little effort, can return the bait dispensing device to the shore by winding in the line, controlling its trajectory and preventing the bait dispenser from impacting repeated on the water, or on rocks and stones.

The substantially symmetrical shape of the half-shells, which give the device a certain amount of streamlining, favours casting of the line with a longer and more precise throw so that a specific portion of the body of water can always be reached.

In particular, the torpedo shape of the container allows the device to penetrate the water before opening: in fact, the bait dispenser penetrates the water before the difference in viscosity of the liquid medium with respect to that of the air causes the start of separation of the half-shells. Opening of the bait dispenser underwater causes more concentrated sinking of the bait toward the bottom: the descending column of bait is much more circumscribed and well defined, with more accurate and efficient bait dispensing. In this way, casting of the line in order to dispense bait to the body of water in which fishing will take place is also optimized, speeding up all the preparatory procedures, considered tedious, and leaving more time for the enjoyable part of fishing.

The choice of using magnets to maintain the two half-shells in contact, and plastic material to produce the two half-shells, also makes the bait dispenser very light, allowing it to contain a greater weight of bait and reach long distances easily with limited casting strength, and then float on the water, thus facilitating its recovery after dispensing of the bait.

The lightness of the bait dispenser is also ensured by the presence of diaphragms that delimit hollow structures of the container, which will never fill with water, maintaining the bait dispenser light and with increased floatability during recovery. Moreover, said hollows structures, located in the head and/or tail portion of the container, confine the bait in its central portion, to ensure better overall balancing of the bait dispenser during casting.

In the remote chance that the bait dispenser fails to open in the water, for example due to a bad cast caused by breakage of the line, the device floats even when full of bait and can be easily recovered and reutilized for subsequent casts, without dispersing the bait in areas in which no catch is to be made.

The threadlike elements for fastening the half-shells to the line, due to their symmetrical positioning with respect to the joining plane of the half-shells, optimize the casting strength, once again making it easier to reach long distances with minimum effort, and in this way also ensuring that the bait dispenser remains completely closed until it penetrates the water.

Even more advantageously, fastening of the threadlike elements in proximity of the joining edge of the half-shells prevents any tearing force generated by casting of the bait dispensing device, not belonging to the joining plane of the half-shells, from separating them prematurely.

At the same time, during recovery, the elastically flexible threadlike elements maintain the two half-shells at a slight distance from each other along a limited portion: advantageously, the minimum aperture ensured by these elastic threadlike elements allows any residual water to be completely eliminated from the container and ensures that the device remains empty during its recovery and is therefore very light and buoyant.

Said emerging structures allow optimal fastening of the threadlike elements so that, during immersion of the bait dispenser in the water, mutual sliding of the two half-shells on their joining plane is facilitated, ensuring more controlled opening of the container and more regular dispensing of the bait.

Said tubular element, and in particular its head ring, forms a sort of safety latch against accidental opening of the bait dispenser during casting, acting as means for retaining the divaricating elastic force of the threadlike elements. Moreover, said tubular element also acts as anti-tangle device, i.e. during casting it prevents the line from becoming tangled on the swivel and/or on the threadlike elements for connection to the bait dispenser.

A further advantage of the invention consists in the possibility of arranging, along the joining edge of the half-shells, liquid tight sealing means, to prevent any liquids contained in the bait from being scattered during casting, seeping between the two half-shells.

The load bearing wings give rigidity and strength to the bait dispenser.

In particular, when the load bearing wings belong to the joining plane of the two half-shells, they ensure that this plane, during casting, is maintained horizontal and the bait dispenser travels parallel to the surface of the water: advantageously, during casting, the two half-shells are struck by the air with the same intensity and remain closed, without the risk of premature opening of the container.

However, also the variant of the load bearing wings belonging to the plane orthogonal to the joining plane of the two half-shells offers an important advantage: the wings never risk being soiled with the bait during loading, as they are outside the half-shells, always maintaining their original thickness and offering the same design resistance to air, while always ensuring maximum reliability of the bait dispenser over time.

The stabilizing wings instead prevent the bait dispenser from rotating about its axis.

In general, the bait dispensing device according to the invention has high performance in terms of throw, is very manageable and easy to recover, simple to use and load, durable and not subject to wear and malfunction, accurate, light and inexpensive.

Further characteristics and advantages of the invention will be more evident from the detailed description set forth below, with the aid of the figures, which represent preferred methods of implementation, illustrated by way of non-limiting example, wherein:
Fig. 1 represents, in an axonometric view, a bait dispensing device according to a possible embodiment of the invention, in closed configuration;
Figs. 2 and 3 represent, respectively in a top plan view and in a lateral plan view, the bait dispensing device of Fig. 1;
Fig. 4 represents, in a longitudinal vertical section, the bait dispensing device of Fig. 1;
Figs. 5, 6 and 7 represent, respectively in an axonometric view and in two plan views, the bait dispensing device according to a possible embodiment of the invention, during its use, in three distinct steps;
Figs. 8 and 9 represent, respectively in a top plan view and in a longitudinal vertical section, a bait dispensing device according to another possible embodiment of the invention, in closed configuration;
Figs. 10 and 11 represent, in an axonometric view from two different perspectives, the bait dispensing device of Fig. 8 during opening;
Figs. 12 and 13 represent, in a lateral plan view, a bait dispensing device according to a further possible embodiment of the invention, respectively in closed and open configuration;
Fig. 14 represents, in an axonometric view, a detail of the device of Fig. 12;
Fig. 15 represents, in an axonometric view, the bait dispensing device of Fig. 12 during use.

With reference to the figures, these illustrate an improved bait dispensing device 1, commonly called bait dispenser, for use in fishing, adapted to contain therein a certain amount of bait 2, to be cast with a line 3, and to open interacting with the water during sinking to allow said bait 2 to be dispensed directly in the water.

Said device 1 essentially comprises:
- a container 4, adapted to retain therein said bait 2 during casting by means of a line 3, divided into two half-shells 14, 24;
- fastening means 7, 8, 10, 11 of said container 4 to said line 3;
- reversible closing means 5, 6, 15, 16 of said container 4.

Said closing means allow the container 4 containing the bait 2 to be safely closed, to then yield due to resistance of friction with the water and allow the two half-shells 14, 24 to separate and the container to open completely.

In the invention claimed, said half-shells 14, 24 are adapted, during release of the bait, to separate completely, moving away from each other, retained only by the fastening means 7, 8, 10, 11 that connect them to the line 3, while during recovery of the device, after all the bait has been dispensed, said half-shells 14, 24 are adapted to join together again, at least in the portion thereof opposite with respect to the portion where said fastening means are associated.

In the variants illustrated, said reversible closing means use the attraction force of a magnetic field, produced by four pairs of magnets 5, 6, 15, 16.

Said magnetic field can be generated indifferently by pairs of natural permanent magnets, as illustrated in the figures, or by pairs of electromagnets. Alternatively, the pairs can be formed by one magnet and by one element made of ferromagnetic material.

Said magnets are advantageously arranged on said container 4, so as to generate an attraction force between the two half-shells 14, 24, thereby ensuring that they close completely with the bait 2 inside. The magnets of each pair 5, 6, 15, 16 are facing each other with the respective opposite poles, and are therefore associated with said half-shells 14, 24 so that they attract each other.

In particular, to allow perfect sealing of the two half-shells 14, 24 during casting of the device 1, and to ensure that it opens correctly in the water, said pairs of magnets 5, 6, 15, 16 act on the joining plane of the half-shells.

Optimal sealing performance is obtained when said pairs of magnets 5, 6, 15, 16 are arranged precisely along the joining edge of said half-shells 14, 24.

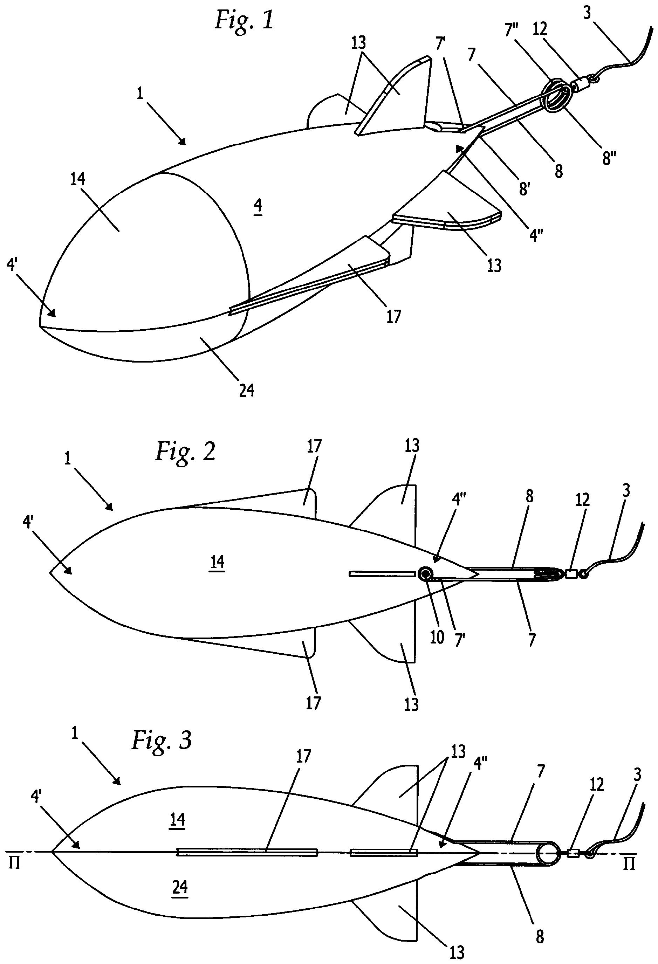

In the variant illustrated in Figs. 1-11, the four pairs of magnets 5, 6, 15, 16 are arranged, for example, in the four cardinal points.

In particular, two pairs of magnets are arranged in the two end portions of the bait dispenser: a first pair of magnets 5 is provided in proximity of the fastening means 7, 8 of the container 4 to the line 3, while the second pair 6 occupies the opposite portion of the container 4. Other two pairs 15, 16 are arranged in the middle zone of the container 4.

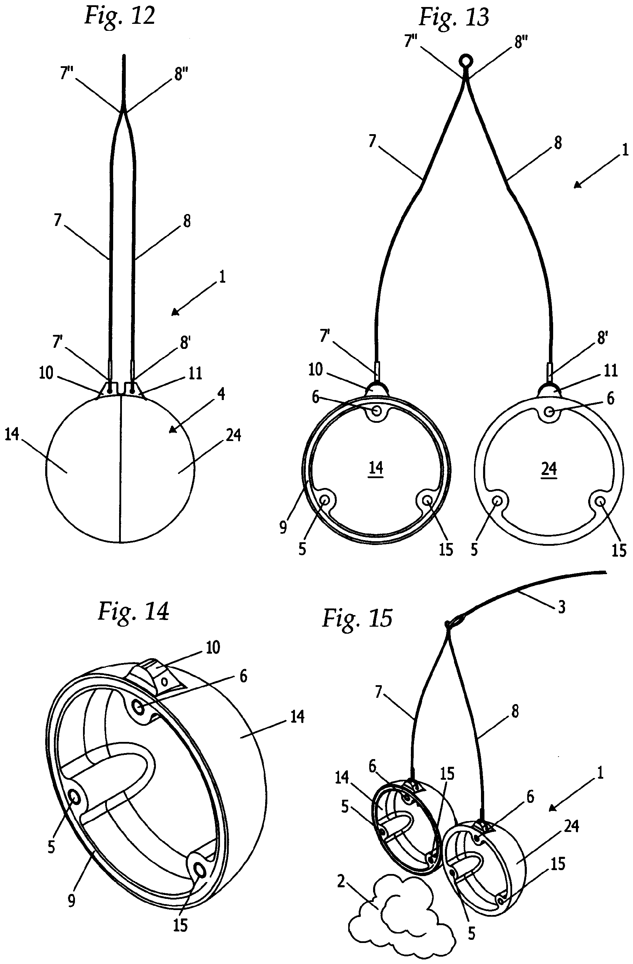

With reference to Figs. 12-15, these instead show three pairs of magnets 5, 15, 6 distributed equidistant from one another, at 120°, along the circumference of the joining edge of the two half-shells 14, 24.

In a possible embodiment of the device 1, not illustrated, a single pair of magnets is used, each magnet having a substantially annular shape. In this case, the two annular magnets would occupy, respectively and continuously, the whole of the joining edge of the two half-shells 14, 24.

In any case, the intensity, the position and the number of the pairs of magnets can be suitably chosen based on the size of the container 4, the weight of the container when filled with bait 2, and the throwing distance to be reached with the device 1.

Said half-shells 14, 24 have a substantially symmetrical shape with respect to their joining plane, and in particular, the shape of said container 4 reproduces a solid of revolution. Without corners or particular deformations and bulges of the container 4, the bait dispenser 1 is more streamlined and consequently requires less force to be cast. This also reduces the risk of subjecting the pairs of magnets 5, 6, 15, 16, which hold the two half-shells 14, 24 in position, to external stresses caused by friction with the air, which could open the container 4 before it is immersed in the water.

For this purpose, the "torpedo" or "airship" shaped container illustrated in Figs. 1-11, where the container 4 has a tapered shape with a pointed head portion 4' and tail portion 4", is particularly advantageous.

The pointed head portion 4' facilitates penetration of the bait dispenser in the water, while the pointed tail portion 4" prevents turbulence, with negative pressure that could slow down the bait dispenser, from being created in the rear portion of the container during casting of the bait dispenser,. Therefore, the "torpedo" shape of the container offers high performance, both during casting and during dispensing of the bait.

Alternatively, a spherical shaped container 4, as illustrated in Figs. 12-15, or egg shaped container, is also manageable and just as advantageous.

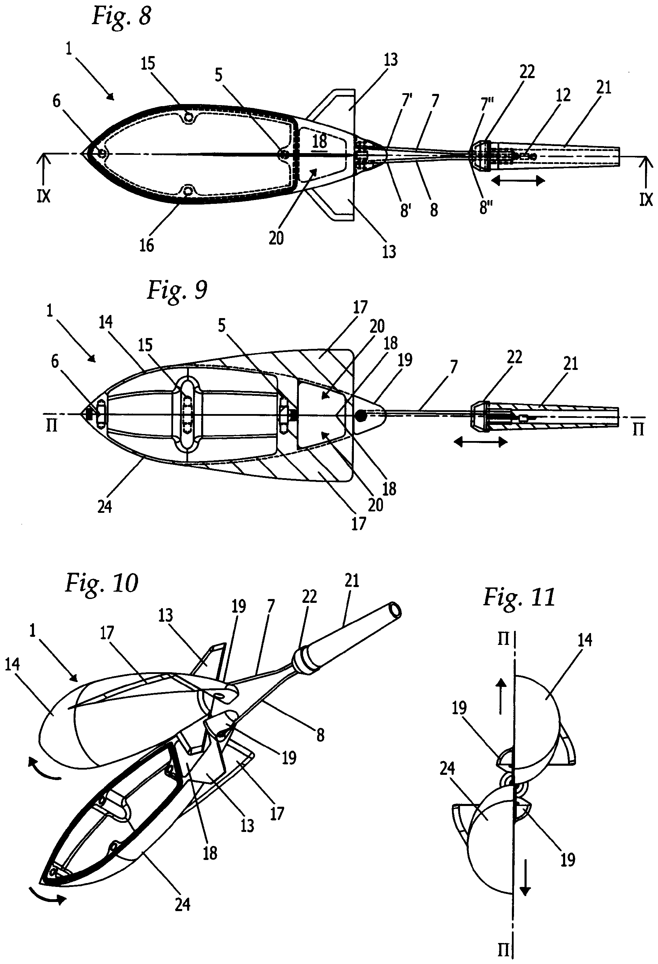

With particular reference to Figs. 9-10, said half-shells 14, 24 each comprise a diaphragm 18. Said diaphragms 18 are arranged in said tail portion 4" of said container 4 and are adapted to face each other, in contact, in closed configuration of the bait dispenser 1. In this embodiment, the pair of magnets 5 next to the coupling means 7, 8 of the line 3 to the container 4 are arranged slightly recessed with respect to the end of its tail portion 4", however without hampering the mutual attraction force of the two half-shells 14, 24.

Alternatively, diaphragms 18 could also be provided in said head portion 4' of said container 4.

In particular, said diaphragms 18 delimit hollow structures 20, thus defining a volume of air inside the container, which will not be occupied, either by bait during casting or by water during recovery.

Said fastening means of said container 4 to said line 3 comprise two elastically flexible threadlike elements 7, 8, each having a first 7', 8' and a second 7", 8" end.

Each first end 7', 8' is associated respectively with one of said half-shells 14, 24, at the pointed tail portion 4" of the container: in the embodiment illustrated, each first end 7', 8' is wound around itself to form a curl, maintained in position against the respective half-shell 14, 24 by means of a fixing screw 10, 11.

The two second ends 7", 8" of the threadlike elements 7, 8 are instead joined to each other, so as to be simultaneously associated with said line 3.

Said threadlike elements 7, 8 are advantageously made of spring steel, so as to ensure, regardless of their very simple shape, maximum flexibility and elasticity.

Said line 3 is associated with said threadlike elements 7, 8 with interposing of a swivel 12, necessary to avoid damaging twisting of the line that can cause tangling thereof.

Said two second ends 7", 8" can be welded together, or wound helically. In this latter case, the two elastically flexible threadlike elements are obtained from the two end portions of a single elastically flexible threadlike element, wound helically in the central portion thereof, where the line 3 will then be fastened. Alternatively, said single threadlike element can be folded over itself, in the central portion, so as to define the two threadlike elements 7, 8 (Figs. 8-9 and Figs. 12-15).

Said threadlike elements 7, 8 have the same length, to ensure that the force transmitted by the line 3 to the container 4 is equally divided on the two half-shells 14, 24 and does not create different stresses that can cause the container 4 to open during casting.

In all the figures illustrated, said first ends 7', 8' of said two threadlike elements 7, 8 are associated with said half-shells 14, 24 in symmetrical position with respect to their joining plane, and in particular in proximity of their joining edge.

It is essential for said flexible threadlike elements 7, 8, due to their elasticity, to allow the two half-shells 14, 24 to carry out two distinct movements: firstly to slide one on the other, rotating in their joining plane and, only subsequently, to move apart from each other in a plane orthogonal to said joining plane.

For this purpose, as illustrated in detail in the variant of Figs. 10 and 11, said bait dispensing device comprises two structures 19 emerging from said joining plane π of said half-shells 14, 24, each belonging to a half-shell and obtained where said fastening means connect to said container.

Said structures 19 protrude from the respective half-shells 14, 24 orthogonally to the joining plane π of the half-shells.

Therefore, fastening of the threadlike elements 7, 8 to the half-shells 14, 24 takes place on planes orthogonal to the joining plane π, so that the elastic force promotes sliding of the half-shells on this joining plane. This sliding is clearly visible in Figs. 10-11, which show the bait dispensing device during the first part of opening thereof.

Figs. 9-11 clearly show a tubular element 21, forced to slide on said elastically flexible threadlike elements 7, 8.

Said tubular element 21 is provided with a head ring 22 adapted to occupy two end positions on said threadlike elements 7, 8: a first position in which it is in proximity of their first ends 7', 8' and a second position in which it is in proximity of their second ends 7", 8".

Said tubular element 21, and in particular the rubber or silicone head ring 22 thereof, work by interference with said threadlike elements 7, 8. During casting of the bait dispenser 1, the head ring 22 of the tubular element 21 is in the first position, to ensure that the spreading elastic force of the threadlike elements 7, 8 does not prevail on the magnetic attraction between the two half-shells 14, 24, and no accidental and unwanted opening of the bait dispenser occurs. Friction with the water, during sinking of the bait dispenser, will move said head ring 22 to the second position, releasing the elastic force of the threadlike elements 7, 8.

Moreover, said tubular element 21 is adapted to cover the swivel 12 for connection of the line 3 to the fastening means of the bait dispenser 1, so as to prevent, above all during recovery, the line 3 from tangling and getting caught on algae on the bottom.

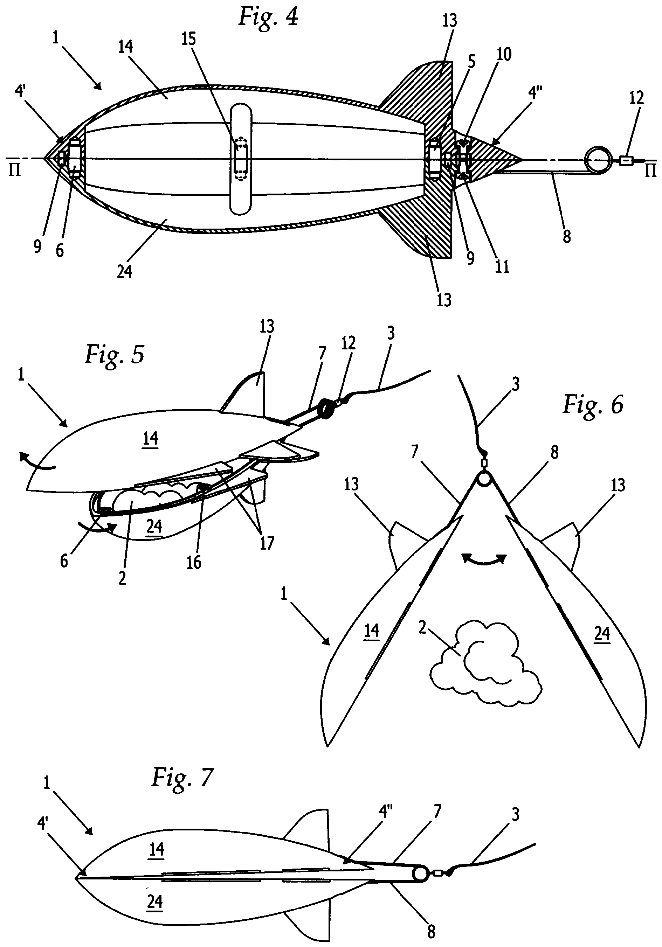

From the section of Fig. 4, it is possible to appreciate the presence of liquid tight sealing means, arranged along the joining edge of the half-shells. Advantageously, said sealing means prevent any liquids contained in the bait from scattering during casting, seeping between the two half-shells.

Said joining means are produced with O-Ring type gaskets 9, but could alternatively comprise suitable form-fit connections, of the male-female type, obtained along the edge of the half-shells, where joining takes place.

A plurality of wings is provided on the outer surface of the container 4: four stabilizing wings 13, equidistant from one another, are arranged on the tail portion 4" with the function of preventing axial rotation of the container during casting. Two stabilizing wings belong to the joining plane of the half-shells, while two stabilizing drift wings are orthogonal thereto.

Along the body of the container, the bait dispenser also comprises two load bearing wings 17.

As illustrated in the embodiment of Figs. 1-7, said load bearing wings can belong to the joining plane of the two half-shells 14, 24, useful to allow the bait dispenser to glide with the joining plane arranged parallel with respect to the surface of the water and to thus maintain a precise and accurate trajectory during casting.

As illustrated instead in the embodiment of Figs. 8-10, alternatively to the joining plane, said load bearing wings belong to the orthogonal plane of the two half-shells 14, 24, offering the same design resistance to air and always ensuring maximum reliability of the bait dispenser over time.

In the particular embodiment illustrated, the load bearing wings 17 extend along the body of the container until they incorporate the two corresponding stabilizing wings 13 coplanar thereto.

The container 4 is made entirely of light, strong plastic material, with a limited specific weight, lower than the weight of water, which allows it to float. In particular, the container 4 is made of polypropylene.

Use of the invention is described below.

After fastening the container 4 to the line 3, by means of the two threadlike elements 7, 8, the bait dispensing device is ready to be used.

The person fishing first fills the cavities of the two half-shells 14, 24, by immersing these half-shells in a bucket containing the bait 2 or using a spoon. After filling the two cavities, the two half-shells 14, 24 are moved toward each other so that the respective free edges are facing and the attraction force of the opposite poles of the pairs of magnets 5, 6, 15, 16 allows the two half-shells 14, 24 to clamp, closing the container 4.

Lastly, the person fishing slides the tubular element 21 on the threadlike elements 7, 8, until the head ring 22 thereof takes the first "safety latch" position.

After identifying the point in which the bait 2 is to be dispensed, the person fishing casts the bait dispenser 1 with the line 3.

After reaching the water, the container 4 opens during sinking, after the tubular element 21, with the head ring 22 has moved automatically to the second position.

In particular, in the case in which the container has a spherical shape, the resisting force exerted by contact with the water, greater with respect to that caused by friction of the air, overcomes the attraction force of the magnetic field, and causes complete separation of the two half-shells 14, 24.

Instead, in the case in which the container has a torpedo shape, as illustrated in the figures, the pointed head portion 4' of the bait dispenser ensures that this latter penetrates the water in depth (for around half a meter) before the hydrodynamic resisting force exerted by the friction with the water on the two half-shells, overcomes the magnetic attraction force and allows the bait dispenser to open. The different viscosity of the water with respect to the viscosity of the air causes the two half-shells 14, 24 to slide one on the other: the two half-shells rotate slightly one on the other about the joining point of the threadlike elements 7, 8, spreading apart the respective head portions 4', where the water infiltrates (Fig. 5). Entry of the water into the container 4 increases the resisting force that opposes the magnetic force and completely separates the two half-shells 14, 24 which by moving away from each other allow complete dispensing of the bait 2 (Fig. 6).

The method of fastening the elastic threadlike elements 7, 8 to the two half-shells 14, 24, and the orientation of the plane on which the elastic force of these elements acts, also favours mutual sliding of the two half-shells 14, 24 on the joining plane π thereof (Figs. 10 and 11).

In all cases, the bait 2 scatters rapidly under the surface of the water, while the two half-shells 14, 24 remain individually associated with the line 3.

The bait dispenser 1, now empty returns to the surface, held in the open position by the spreading effect of the two elastically flexible threadlike elements 7, 8.

The person fishing rewinds the line 3 and recovers the empty bait container 4.

During recovery, the bait dispenser 1 tends to close: due to friction on the water, the two half-shells 14, 24 move toward each other and the magnetic attraction force puts the container 4 back together. In particular, the pair of magnets 6 arranged in the head portion 4' of the bait dispenser are the first to re-couple, while the elastic force of the threadlike elements 7, 8 tends to maintain the two magnets 5 forming the pair arranged in the tail portion 4" of the torpedo shaped container slightly spaced from each other (Fig. 7). Advantageously, the slight detachment between the two half-shells 14, 24, equal to around 10-15 mm, ensures that no water remains inside the container during its recovery.

## Claims

1. Bait dispensing device (1) for use in fishing, adapted to be cast with a line (3) and to open in water, to allow dispensing of bait (2), comprising:
- a container (4), adapted to house therein said bait (2) during casting, divided into two half-shells (14, 24) having a substantially symmetrical shape with respect to a mutual joining plane (π);
- fastening means (7, 8, 10, 11) of said container (4) to said line (3);
- reversible closing means (5, 6) for said container (4),
wherein:
- said reversible closing means (5, 6) use the attraction force of a magnetic field active between said two half-shells (14, 24);
- said fastening means of said container to said line comprise two flexible threadlike elements (7, 8) of the same length, each having two ends (7', 7", 8', 8"), where each first end (7', 8') is associated with one of said half-shells (14, 24), and each second end (7", 8") is associated to each other so as to be simultaneously associated with said line (3), wherein said first ends (7', 8') of said two threadlike elements (7, 8) are associated with said half-shells (14, 24) in symmetrical position in proximity of the joining plane (π) of the half-shells, wherein said two half-shells (14, 24) are adapted to separate completely from each other due to the action of the resisting force caused by friction with the water during sinking of the bait dispensing device (1),
**characterized in that** said flexible threadlike elements (7, 8) have a spreading elastic force such that, due to their elasticity, they have a spreading effect on said half-shells during use to allow the opening of the bait dispenser (1) and to hold the half-shells (14, 24) in open position during the recovery of the bait dispenser (1).

2. Bait dispensing device (1) according to claim 1, **characterized in that** the shape of said container (4) reproduces a solid of revolution.

3. Bait dispensing device (1) according to claim 2, **characterized in that** said container (4) has a tapered shape and is provided with a head portion (4') and a tail portion (4") substantially pointed, where said fastening means (7, 8, 10, 11) of said container (4) to said line (3) are arranged on said tail portion (4").

4. Bait dispensing device (1) according to claim 3, **characterized in that** said half-shells (14, 24) comprise diaphragms (18), arranged in said head portion (4') and/or said tail portion (4") of said container (4), adapted to delimit hollow structures (20) inside said bait dispensing device (1).

5. Bait dispensing device (1) according to claim 1, **characterized in that** said magnetic field is generated by at least one pair of natural permanent magnets or by at least one pair of electromagnets, where the magnets of each pair are associated with said half-shells (14, 24) so that the respective opposite poles are facing each other, to generate a magnetic attraction force that acts through said joining plane (π) of said half-shells (14, 24).

6. Bait dispensing device (1) according to claim 5, **characterized in that** said at least one pair of magnets (5, 6) is arranged along a joining edge of said half-shells (14, 24).

7. Bait dispensing device (1) according to claim 1, **characterized in that** it comprises two structures (19) emerging from said joining plane (π) of the two half-shells (14, 24), each belonging to one half-shell (14, 24) at the tail portion (4") of said container (4), adapted to offer a fastening point for said threadlike elements (7, 8) a said container (4), so that the elastic force exerted by said threadlike elements (7, 8) acts in the joining plane (π) of said half-shells (14, 24), causing them to slide one on the other.

8. Bait dispensing device (1) according to claim 1, **characterized in that** it comprises a tubular element (21), forced to slide on said threadlike elements (7, 8), provided with a head ring (22) adapted to occupy two end positions: a first position in which it is in proximity of their first ends (7', 8') and a second position in which it is in proximity of their second ends (7", 8"), so that, by occupying an intermediate position between said two end positions, it modulates the elastic force which opens wide said threadlike elements (7, 8) during casting, to prevent accidental opening of the two half-shells (14, 24).

9. Bait dispensing device (1) according to claim 1, **characterized in that** said half-shells (14, 24) comprise liquid tight sealing means (9), arranged along a joining edge.

10. Bait dispensing device (1) according to claim 1, **characterized in that** it comprises two load bearing wings (17) belonging alternatively to the joining plane (π) of the two half-shells (14, 24) or to a plane orthogonal thereto.

11. Bait dispensing device (1) according to claim 1, **characterized in that** it comprises four stabilizing wings (13), two belonging to the joining plane (π) of the two half-shells (14, 24) and two belonging to the plane orthogonal thereto.

## Patentansprüche

1. Eine Köderabgabevorrichtung (1) zur Verwendung beim Angeln, eingerichtet, um mit einer Schnur (3) geworfen zu werden und sich im Wasser zu öffnen, um die Abgabe des Köders (2) zu ermöglichen, umfassend:
- einen Behälter (4), eingerichtet, um den besagten Köder (2) während des Werfens darin aufzunehmen, und in zwei Halbschalen (14, 24) unterteilt, die eine im wesentlichen symmetrische Form in Bezug auf eine gegenseitige Verbindungsebene (π) haben;
- Befestigungsmittel (7, 8, 10, 11) des besagten Behälters (4) an der besagten Schnur (3);
- umkehrbare Verschlussmittel (5, 6) für den besagten Behälter (4),
wobei:
- die besagten reversiblen Verschlussmittel (5, 6) die Anziehungskraft eines zwischen den besagten beiden Halbschalen (14, 24) aktiven Magnetfeldes nutzen;
- die besagten Befestigungsmittel des besagten Behälters an der besagten Schnur zwei flexible, fadenförmige Elemente (7, 8) gleicher Länge umfassen, die jeweils zwei Enden (7', 7", 8', 8") aufweisen, wobei jedes erste Ende (7', 8') mit einer der besagten Halbschalen (14, 24) verbunden ist und jedes zweite Ende (7", 8") so miteinander verbunden ist, dass es gleichzeitig mit der besagten Schnur (3) verbunden ist, wobei die besagten ersten Enden (7', 8') der besagten beiden fadenartigen Elemente (7, 8) mit den besagten Halbschalen (14, 24) in symmetrischer Position in der Nähe der Verbindungsebene (π) der Halbschalen verbunden sind, wobei die besagten beiden Halbschalen (14, 24) so eingerichtet sind, dass sie sich aufgrund der Wirkung der Widerstandskraft, die durch Reibung mit dem Wasser während des Versenkens der Köderspendervorrichtung (1) verursacht wird, vollständig voneinander trennen, **dadurch gekennzeichnet, dass** die besagten flexiblen fadenartigen Elemente (7, 8) eine spreizende elastische Kraft haben: so dass sie aufgrund ihrer Elastizität während des Gebrauchs eine spreizende Wirkung auf die besagten Halbschalen haben, um das Öffnen des Köderspenders (1) zu ermöglichen und die Halbschalen (14, 24) während der Rückholung des Köderspenders (1) in offener Position zu halten.

2. Eine Köderabgabevorrichtung (1) gemäß Anspruch 1, **dadurch gekennzeichnet, dass** die Form des besagten Behälters (4) einen Rotationskörper nachbildet.

3. Eine Köderabgabevorrichtung (1) gemäß Anspruch 2, **dadurch gekennzeichnet, dass** der besagte Behälter (4) eine sich verjüngende Form hat und mit einem Kopfabschnitt (4') und einem im Wesentlichen spitzen Endabschnitt (4") versehen ist, wobei die besagten Befestigungsmittel (7, 8, 10, 11) des besagten Behälters (4) an der besagten Schnur (3) an dem besagten Endabschnitt (4") angeordnet sind.

4. Eine Köderabgabevorrichtung (1) gemäß Anspruch 3, **dadurch gekennzeichnet, dass** die besagten Halbschalen (14, 24) Diaphragmen (18) umfassen, die in dem besagten Kopfabschnitt (4') und/oder dem besagten Endabschnitt (4") des besagten Behälters (4) angeordnet sind und dazu eingerichtet sind, hohle Strukturen (20) im Inneren der besagten Köderausgabevorrichtung (1) abzugrenzen.

5. Eine Köderabgabevorrichtung (1) gemäß Anspruch 1, **dadurch gekennzeichnet, dass** das besagte Magnetfeld durch mindestens ein Paar natürlicher Permanentmagnete oder durch mindestens ein Paar Elektromagnete erzeugt wird, wobei die Magnete jedes Paares den besagten Halbschalen (14, 24) so zugeordnet sind, dass die jeweils entgegengesetzten Pole einander zugewandt sind, um eine magnetische Anziehungskraft zu erzeugen, die durch die besagte Verbindungsebene (π) der besagten Halbschalen (14, 24) wirkt.

6. Eine Köderabgabevorrichtung (1) gemäß Anspruch 5, **dadurch gekennzeichnet, dass** das besagte mindestens eine Paar von Magneten (5, 6) längs einer Verbindungskante der besagten Halbschalen (14, 24) angeordnet ist.

7. Eine Köderabgabevorrichtung (1) gemäß Anspruch 1, **dadurch gekennzeichnet, dass** sie zwei Strukturen (19) umfasst, die aus der besagten Verbindungsebene (π) der beiden Halbschalen (14, 24) austreten, wobei jede zu einer Halbschale (14, 24) am Endabschnitt (4") des besagten Behälters (4) gehört, eingerichtet, um einen Befestigungspunkt für die besagten fadenförmigen Elemente (7, 8) an dem besagten Behälter (4) zu bieten, so dass die von den besagten fadenförmigen Elementen (7, 8) ausgeübte elastische Kraft in der Verbindungsebene (π) der besagten Halbschalen (14, 24) wirkt, wodurch diese aufeinander gleiten.

8. Eine Köderabgabevorrichtung (1) gemäß Anspruch 1, **dadurch gekennzeichnet, dass** sie ein rohrförmiges Element (21) umfasst, das gezwungen wird, auf den besagten fadenförmigen Elementen (7, 8) zu gleiten, und das mit einem Kopfring (22) versehen ist, der zwei Endpositionen einnehmen kann: eine erste Position, in der er sich in der Nähe deren ersten Enden (7', 8') befindet, und eine zweite Position, in der er sich in der Nähe deren zweiten Enden (7", 8") befindet, so dass er, indem er eine Zwischenposition zwischen den besagten beiden Endpositionen einnimmt, die elastische Kraft moduliert, die die besagten fadenförmigen Elemente (7, 8) während des Werfens weit öffnet, um ein versehentliches Öffnen der besagten beiden Halbschalen (14, 24) zu verhindern.

9. Eine Köderabgabevorrichtung (1) gemäß Anspruch 1, **dadurch gekennzeichnet, dass** die besagten Halbschalen (14, 24) flüssigkeitsdichte Dichtungsmittel (9) umfassen, die längs einer Verbindungskante angeordnet sind.

10. Eine Köderabgabevorrichtung (1) gemäß Anspruch 1, **dadurch gekennzeichnet, dass** sie zwei Tragflügel (17) umfasst, die alternativ zu der Verbindungsebene (π) der beiden Halbschalen (14, 24) oder zu einer dazu senkrechten Ebene gehören.

11. Eine Köderabgabevorrichtung (1) gemäß Anspruch 1, **dadurch gekennzeichnet, dass** sie vier Stabilisierungsflügel (13) umfasst, von denen zwei zur Verbindungsebene (π) der beiden Halbschalen (14, 24) und zwei zu der dazu orthogonalen Ebene gehören.

## Revendications

1. Dispositif de distribution d'appâts (1) à utiliser pour la pêche, adapté pour être lancé avec une ligne (3) et pour s'ouvrir dans l'eau, pour permettre la distribution d'appâts (2), comprenant :
- un récipient (4), adapté pour y loger ledit appât (2) pendant le lancer, divisé en deux demi-coques (14, 24) ayant une forme sensiblement symétrique par rapport à un plan de jonction mutuelle (π) ;
- des moyens de fixation (7, 8, 10, 11) dudit conteneur (4) à ladite ligne (3) ;
- des moyens de fermeture réversibles (5, 6) pour ledit conteneur (4),
où :
- lesdits moyens de fermeture réversibles (5, 6) utilisent la force d'attraction d'un champ magnétique actif entre lesdites deux demi-coques (14, 24) ;
- lesdits moyens de fixation dudit récipient à ladite ligne comprennent deux éléments filiformes (7, 8) de même longueur, chacun ayant deux extrémités (7', 7", 8', 8"), où chaque première extrémité (7', 8') est associée à l'une desdites demi-coques (14, 24), et chaque deuxième extrémité (7", 8") est associée à l'autre et peut être associée à ladite ligne (3), où lesdites premières extrémités (7', 8') desdits deux éléments filiformes (7, 8) sont associés auxdites demi-coques (14, 24) en position symétrique à proximité du plan de jonction (π) des demi-coques, où lesdites deux demi-coques (14, 24) sont adaptées pour se séparer complètement l'une de l'autre sous l'action de la force de résistance provoquée par la friction avec l'eau pendant l'enfoncement du dispositif de distribution d'appâts (1),
**caractérisé par le fait que** lesdits éléments filiformes (7, 8) ont une force élastique d'écartement telle que, du fait de leur élasticité, ils ont un effet d'écartement sur lesdites demi-coques pendant l'utilisation pour permettre l'ouverture du distributeur d'appâts (1) et pour maintenir les demi- coques (14, 24) en position ouverte pendant la récupération du distributeur d'appâts (1).

2. Dispositif de distribution d'appâts (1) selon la revendication 1, **caractérisé par le fait que** la forme dudit récipient (4) reproduit un solide de révolution.

3. Dispositif de distribution d'appâts (1) selon la revendication 2, **caractérisé par le fait que** ledit récipient (4) a une forme conique et est pourvu d'une portion de tête (4') et d'une portion de queue (4") substantiellement pointues, où lesdits moyens de fixation (7, 8, 10, 11) dudit récipient (4) à ladite ligne (3) sont disposés sur ladite portion de queue (4").

4. Dispositif de distribution d'appâts (1) selon la revendication 3, **caractérisé par le fait que** lesdites demi-coques (14, 24) comprennent des diaphragmes (18), disposés dans ladite portion de tête (4') et/ou ladite portion de queue (4") dudit récipient (4), adaptés pour délimiter des structures creuses (20) à l'intérieur dudit dispositif distributeur d'appâts (1).

5. Dispositif de distribution d'appâts (1) selon la revendication 1 , **caractérisé par le fait que** ledit champ magnétique est généré par au moins une paire d'aimants permanents naturels ou par au moins une paire d'électro-aimants, où les aimants de chaque paire sont associés auxdites demi-coques (14, 24) de sorte que les pôles opposés respectifs sont en face l'un de l'autre, pour générer une force d'attraction magnétique qui agit à travers ledit plan de jonction (π) desdites demi-coques (14, 24).

6. Dispositif de distribution d'appâts (1) selon la revendication 5, **caractérisé par le fait que** ladite paire d'aimants (5, 6) au minimum est disposé le long d'un bord de jonction desdites demi-coques (14, 24).

7. Dispositif de distribution d'appâts (1) selon la revendication 1, **caractérisé par le fait qu'**il comprend deux structures (19) émergeant dudit plan de jonction (π) des deux demi-coques (14, 24), chacune appartenant à une demi-coque (14, 24) à la portion de queue (4") dudit récipient (4), adapté pour offrir un point de fixation pour lesdits éléments filiformes (7, 8) sur ledit récipient (4), de sorte que la force élastique exercée par lesdits éléments filiformes (7, 8) agit dans le plan de jonction (π) desdites demi-coques (14, 24), les faisant glisser l'une sur l'autre.

8. Dispositif de distribution d'appâts (1) selon la revendication 1, **caractérisé par le fait qu'**il comprend un élément tubulaire (21), forcé à glisser sur lesdits éléments filiformes (7, 8), doté d'une bague de tête (22) adaptée pour occuper deux positions d'extrémité : une première position dans laquelle elle est à proximité de leurs premières extrémités (7', 8') et une seconde position dans laquelle il est à proximité de leurs secondes extrémités (7", 8"), de sorte qu'en occupant une position intermédiaire entre lesdites deux positions d'extrémité, il module la force élastique qui écarte ouvre largement lesdits éléments filiformes (7, 8) pendant le lancer pour empêcher l'ouverture accidentelle des deux demi-coques (14, 24).

9. Dispositif de distribution d'appâts (1) selon la revendication 1, **caractérisé par le fait que** lesdites demi-coques (14, 24) comprennent des moyens d'étanchéité aux liquides (9), disposés le long d'un bord de jonction.

10. Dispositif de distribution d'appâts (1) selon la revendication 1, **caractérisé par le fait qu'**il comprend deux ailes porteuses (17) appartenant alternativement au plan de jonction (π) des deux demi-coques (14, 24) ou à un plan orthogonal à celui-ci.

11. Dispositif de distribution d'appâts (1) selon la revendication 1, **caractérisé par le fait qu'**il comprend quatre ailes stabilisatrices (13), deux appartenant au plan de jonction (π) des deux demi-coques (14, 24) et deux appartenant au plan orthogonal à celui-ci.
